# EUROPEAN PATENT SPECIFICATION

(11) **EP 2 990 223 B1**
(45) Date of publication and mention of the grant of the patent: **08.02.2017**
(21) Application number: 14787970.4
(22) Date of filing: 14.04.2014
(51) Int. Cl.: B60C 11/03, B60C 11/04, B60C 11/00

(54) **PNEUMATIC TIRE**
LUFTREIFEN
PNEUMATIQUE

(30) Priority: 24.04.2013 JP 2013091584
(43) Date of publication of application: 02.03.2016
(73) Proprietor: Bridgestone Corporation, Tokyo 104-8340 (JP)
(72) Inventor: OKITA, Yohei, Tokyo 104-8340 (JP)
(74) Representative: Oxley, Robin John George
(86) International application number: PCT/JP2014/060642
(87) International publication number: WO 2014/175104

(56) References cited:
- EP-A2- 2 163 403
- JP-A- H01 278 804
- JP-A- H09 150 605
- JP-A- 2006 514 899
- JP-A- 2009 001 081
- JP-A- 2010 064 738
- US-A1- 2008 105 353

## Description

### Technical Field

The present invention relates to a pneumatic tire.

### Background Art

Japanese Patent Application Laid-Open (JP-A) No. H1-278804 discloses a structure in which a tread of a pneumatic tire has at least two or more layers formed from different compositions, and an outermost layer (A), that is positioned at a radial direction outer side, and an inner layer (B), that is positioned at the inner side thereof, are intertwined alternately, and the boundary surface (P) thereof is zigzag-shaped or wave-shaped in a tire transverse direction cross-section. Reference is also made to EP-A-2163403, which discloses a pneumatic tire according to the preamble of claim 1, JP 2009-001081 and us 2008/105353.

### SUMMARY OF INVENTION

### Technical Problem

Generally, when the tread of a tire becomes worn, the rubber gauge of the tread becomes thin, and therefore, structural members such as the belts and the like approach the surface layer. It can be thought that, in such a state, in a case in which the tire treads on a foreign object on a road surface, penetration of the foreign object to as far as the structural members is easy as compared with at times when the tread is not worn.

Further, in the case of a retreaded tire, when a foreign object penetrates to as far as the structural members, the rubber of the tread cannot be retreaded due to the damage to the base tire, and is discarded. This is undesirable from the standpoint of environmental protection.

Moreover, in the final stage of wear of the tread, generally, the progression of the wear of the rubber is slow, and therefore, as a result, the time over which the tire is used in a state in which the rubber gauge of the tread is thin becomes long.

In view of the above-described circumstances, an object of the present invention is to make it possible to control fluctuations in wear of a tread.

### Solution to Problem

A pneumatic tire relating to a first aspect of the present invention comprises: an outer layer that structures a tread; an inner layer that is layered at a tire radial direction inner side of the outer layer, that structures the tread, and that has a different wear characteristic from the outer layer; and a boundary surface that structures a border of the outer layer and the inner layer, and that, in a tire radial direction cross-section seen from a tire axial direction, has wave shapes having an amplitude in a tire radial direction, wherein the boundary surface is flat in the tire axial direction.

In the above-described pneumatic tire, in the process of the wearing-down of the tread, first, the outer layer is exposed, and, when the wear of the outer layer progresses, the inner layer starts to be exposed, and there becomes a worn state in which the outer layer and the inner layer both exist at the ground-contact surface. When the wear of the tread progresses further, the outer layer disappears, and there becomes a state in which only the inner layer is exposed. Due to the two types of rubber, that have compositions that differ from one another, being worn in stages in this way, fluctuations in the wear of the tread can be controlled.

Further, because the boundary surface is flat in the tire axial direction, eccentric wear in the tire axial direction can be suppressed.

In a second aspect of the present invention, in the pneumatic tire relating to the first aspect, progression of wear of the inner layer is faster than progression of wear of the outer layer.
In this pneumatic tire, because the progression of the wear of the inner layer is faster than that of the outer layer, when the outer layer of the tread becomes worn and the inner layer starts to be exposed, the wear progression speed of the tread increases, and, when there becomes a state in which only the inner layer is exposed, the speed of the progression of the wear increases more. Thus, the usage time in the state in which the rubber gauge of the tread is thin is shortened, and replacement of the tire can be promoted.

In a third aspect of the present invention, in the pneumatic tire relating to the first aspect or second aspect, a plurality of circumferential direction grooves that extend in a tire circumferential direction are formed in the tread; and the boundary surface is positioned further toward a tire radial direction outer side than groove bottoms of the circumferential direction grooves.
In the above-described pneumatic tire, because the boundary surface is positioned further toward the tire radial direction outer side than the groove bottoms of the circumferential direction grooves, in the process of the wearing-down of the tread, the outer layer disappears while the circumferential direction grooves remain, and there becomes a state in which only the inner layer is exposed. Therefore, the usage time in a state in which the remaining groove depth of the circumferential direction grooves has become small can be shortened.

In a fourth aspect of the present invention, in the pneumatic tire relating to any one of the first aspect through the third aspect, a tire rotational direction is specified: and, in a tire circumferential direction cross-section seen from the tire axial direction, the boundary surface has triangular wave shapes at which front sides, that are positioned at a tire rotational direction front side, and rear sides, that are positioned at a tire rotational direction rear side, intersect at peaks at a tire radial direction outer side, and a length of the front sides is formed to be longer than a length of the rear sides.
In the above-described pneumatic tire, the tire rotational direction is specified, and, in a tire circumferential direction cross-section seen from the tire axial direction, the boundary surface has triangular wave shapes at which front sides, that are positioned at the tire rotational direction front side, and rear sides, that are positioned at the tire rotational direction rear side, intersect at peaks at the tire radial direction outer side, and the length of the front sides is formed to be longer than the length of the rear sides. Accordingly, when the tread contacts the ground in a predetermined tire rotational direction and in a worn state in which the outer layer and the inner layer both exist at the ground-contact surface, the force that this inner layer receives from the road surface is mitigated. Therefore, the progression of wear of the inner layer becoming too fast is suppressed, and fluctuations in the wear of the tread can be controlled more appropriately.

### Advantageous Effects of Invention

In accordance with the pneumatic tire relating to the present invention, the excellent effect is obtained that fluctuations in the wear of the tread can be controlled.

### BRIEF DESCRIPTION OF DRAWINGS

Fig. 1 is a cross-sectional view showing a pneumatic tire for an aircraft that is cut at a plane that includes a tire rotational axis.
Fig. 2 is a perspective view showing a state in which a vicinity of a tread is cut in a tire circumferential direction and a tire axial direction.
Fig. 3 is an enlarged sectional view showing a state in which the tread is cut in the tire circumferential direction.
Fig. 4 is an enlarged sectional view in which the tread is cut in the tire circumferential direction, and shows a triangular-wave-shaped boundary surface.
Fig. 5 is an enlarged sectional view in which the tread is cut in the tire circumferential direction, and shows a sine-wave-shaped boundary surface.

### DESCRIPTION OF EMBODIMENTS

An exemplary embodiment of the present invention are described hereinafter on the basis of the drawings. In the drawings, the arrow R direction indicates the tire radial direction, and the arrow W direction indicates the tire axial direction. The direction of moving further from the tire rotational axis (not illustrated) is called the "tire radial direction outer side", and the direction of approaching the tire rotational axis is called the "tire radial direction inner side".

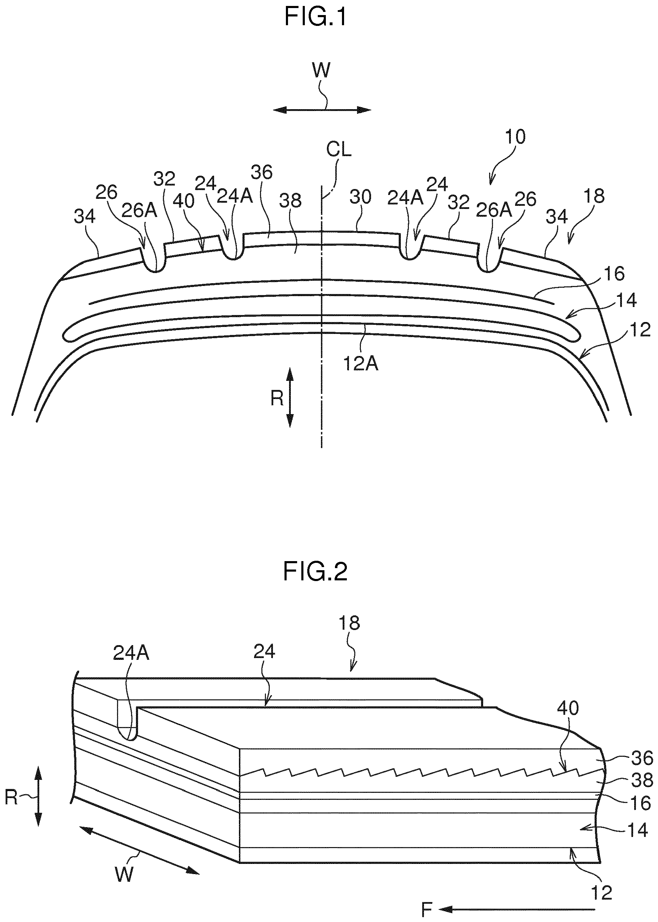

In Fig. 1, a pneumatic tire 10 is, for example, a pneumatic radial tire for an aircraft or for a truck or a bus, and has a carcass ply 12 that span between a pair of bead portions (not illustrated), a belt layer 14, a protecting layer 16 and a tread 18,.

The belt layer 14 is provided at the tire radial direction outer side of a crown portion 12A of the carcass ply 12. As shown in Fig. 2, the belt layer 14 is structured by, for example, six main belt layers (not illustrated) and one auxiliary belt layer (not illustrated). Each of the main belt layers is structured to include cords that are wound in spiral forms in the tire circumferential direction. These cords are structured by organic fibers (e.g., aromatic polyamide). The auxiliary belt layer is structured to include plural cords that are inclined at an angle of, for example, 2∼25° with respect to a tire equatorial plane CL, and that are bent within the same plane so as to be inclined in opposite directions at the tire axial direction end portions, and that extend in zigzag forms in the tire circumferential direction. These cords are structured by organic fibers (e.g., aliphatic polyamide).

The protecting layer 16 is provided at the tire radial direction outer side of the belt layer 14. This protecting layer 16 is a layer in which plural wave-shaped cords (not illustrated), that extend in wave shapes in the tire circumferential direction, are lined-up parallel to one another and are coated with rubber. The wave-shaped cords are structured by organic fibers (e.g., aliphatic polyamide).

The tread 18 is provided at the tire radial direction outer side of the protecting layer 16. For example, four circumferential direction grooves 24, 26, that are examples of plural circumferential direction grooves that extend in the tire circumferential direction, are formed in the tread 18, and ribs 30, 32, 34 are demarcated and formed by these circumferential direction grooves 24, 26. The rib 30 is demarcated by the circumferential direction grooves 24 at the both sides of the tire equatorial plane CL, and is positioned at the central portion in the tire axial direction that includes the tire equatorial plane CL. The ribs 32 are demarcated by the circumferential direction grooves 24, 26, and are narrower than the rib 30 that is at the central portion. The ribs 34 are demarcated by the circumferential direction grooves 26, and are positioned at the tire axial direction outer sides of these circumferential direction grooves 26. The ribs 32, 34 are respectively formed at both sides of the tire equatorial plane CL. Note that the number of the circumferential direction grooves may be six. In this case, the number of ribs also increases.

Moreover, the pneumatic tire 10 relating to the present embodiment has an outer layer 36, an inner layer 38, and a boundary surface 40.

The outer layer 36 is rubber that structures the tread. This outer layer 36 is, for example, the outermost layer in the tire radial direction of the tread 18. Note that the placement of the outer layer 36 is not limited to this, and the outer layer 36 may be disposed at the tire radial direction inner side of the outermost layer (not illustrated). In other words, other layers may exist at the tire radial direction outer side of the outer layer 36.

The inner layer 38 is layered at the tire radial direction inner side of the outer layer 36, and is rubber that structures the tread 18, and has a different wear characteristic from the outer layer 36. Concretely, the inner layer 38 is made to be a composition at which the progression of wear is faster than at the outer layer 36.

In Fig. 2, the boundary surface 40 structures the border of the outer layer 36 and the inner layer 38, and, in a tire radial direction cross-section that is seen from the tire axial direction, is made to be wave shapes that have an amplitude in the tire radial direction. On the other hand, the boundary surface 40 is flat in the tire axial direction. Flat includes, in addition to a rectilinear shape, also shapes that are gently curved overall. This boundary surface 40 is positioned further toward the tire radial direction outer side than groove bottoms 24A, 26A of the circumferential direction grooves 24, 26. It is desirable that the entire boundary surface 40 be positioned further toward the tire radial direction outer side than the groove bottoms 24A, 26A, but there may be a structure in which a portion of the boundary surface 40 is positioned further toward the tire radial direction outer side than the groove bottoms 24A, 26A.

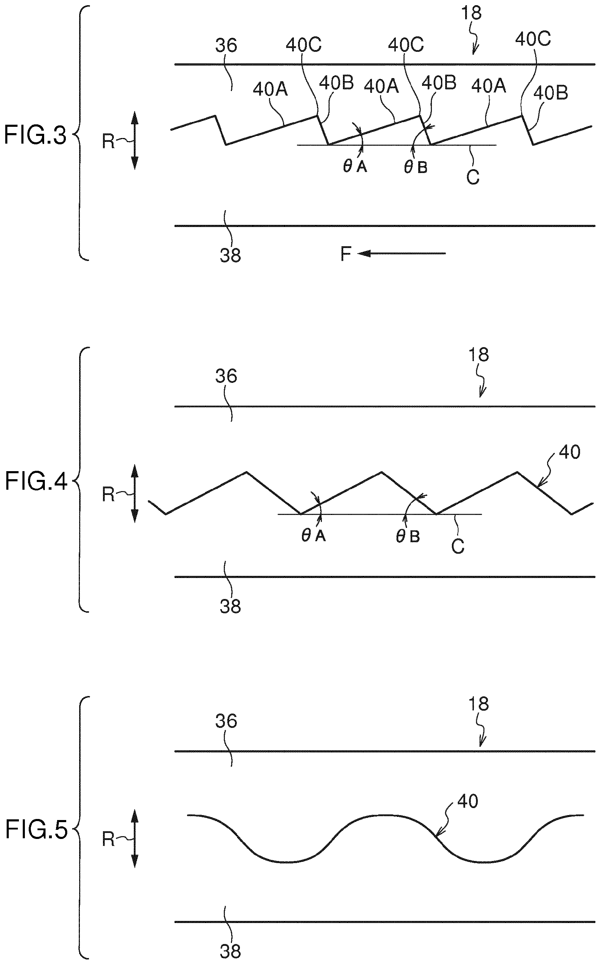

As shown in Fig. 3, in a tire circumferential direction cross-section seen from the tire axial direction, the boundary surface 40 has triangular wave shapes at which front sides 40A, that are positioned at the tire rotational direction front side, and rear sides 40B, that are positioned at the tire rotational direction rear side, intersect at peaks 40C at the tire radial direction outer side. Given that the tire rotational direction of the pneumatic tire 10 is designated to be the arrow F direction, it is desirable that the length of the front sides 40A be formed to be longer than the length of the rear sides 40B. In other words, angle θA, that is at the acute angle side and is formed by tangent line C of the tire circumferential direction and the front side 40A, is set to be smaller than angle θB, that is at the acute angle side and is formed by the tangent line C of the tire circumferential direction and the rear side 40B.

As shown in Fig. 4, the wave shapes of the boundary surface 40 may be triangular waves at which θA = θB. Further, as shown in Fig. 5, the wave shapes of the boundary surface 40 may be arc-shaped wave shapes such as a sine wave or the like. Moreover, although not illustrated, the wave shapes of the boundary surface 40 may be sawtooth shapes, rectangular wave shapes, zigzag shapes, polygonal shapes or the like. Further, various wave shapes may be combined appropriately in the tire circumferential direction.

The peaks 40C of the boundary surface 40 are continuous in the tire axial direction and form a ridgeline (not illustrated). This ridgeline is not limited to being parallel to the tire axial direction, and may be inclined with respect to the tire axial direction.

### (Operation)

The present embodiment is structured as described above, and the operation thereof is as follows. In Fig. 1 and Fig. 2, at the pneumatic tire 10 relating to the present embodiment, because the outer layer 36 is the outermost layer of the tread 18, this outer layer 36 is, from the time of not yet being used, in a state of being exposed at the ground-contact surface. In the process of the wearing-down of the tread 18, when the wear of the outer layer 36 progresses to as far as reaching the boundary surface 40, the inner layer 38 starts to be exposed. At this time, there becomes a worn state in which the outer layer 36 and the inner layer 38 both exist at the ground-contact surface. Because the progression of the wear of the inner layer 38 is faster than that of the outer layer 36, when the inner layer 38 starts to be exposed, the wear progression speed of the tread 18 increases.

When the wear of the tread 18 further progresses, the proportion of the inner layer 38 at the ground-contact surface gradually increases, and, in due course, the outer layer 36 disappears. Due thereto, there becomes a state in which only the inner layer 38 is exposed at the ground-contact surface, and therefore, the speed of the progression of the wear increases more. Thus, the usage time in the state in which the rubber gauge of the tread 18 is thin is shortened, and replacement of the tire can be promoted.

In the present embodiment, the boundary surface 40 is positioned further toward the tire radial direction outer side than the groove bottoms 24A, 26A of the circumferential direction grooves 24, 26. Thus, in the process of the wearing-down of the tread 18, the outer layer 36 disappears while the circumferential direction grooves 24, 26 remain, and there becomes a state in which only the inner layer 38 is exposed. Therefore, the usage time in a state in which the remaining groove depth of the circumferential direction grooves 24 has become small can be shortened. In the present embodiment, as described above, due to the two types of rubber, that have compositions that differ from one another, being worn in stages in this way, fluctuations in the wear of the tread 18 can be controlled.

Further, in the present embodiment, as shown in Fig. 3, the wave shapes of the boundary surface 40 correspond to a predetermined tire rotational direction (the arrow F direction), and, concretely, the length of the front sides 40A is formed to be larger than the length of the rear sides 40B. Accordingly, when the tread 18 contacts the ground in the worn state in which the outer layer 36 and the inner layer 38 both exist at the ground-contact surface, the force that this inner layer 38 receives from the road surface is mitigated. Therefore, the progression of wear of the inner layer 38 becoming too fast is suppressed, and fluctuations in the wear of the tread 18 can be controlled more appropriately.

Moreover, in the present embodiment, because the boundary surface 40 is flat in the tire axial direction, eccentric wear in the tire axial direction can be suppressed.

### [Other Embodiments]

Although the progression of wear of the inner layer 38 is made to be faster than that of the outer layer 36, the relationship of the speeds of the progression of wear is not limited to this.

### (Explanation of Reference Numerals)

- 10: pneumatic tire
- 24: circumferential direction groove
- 24A: groove bottom
- 26: circumferential direction groove
- 26A: groove bottom
- 36: outer layer
- 38: inner layer
- 40: boundary surface
- 40A: front side
- 40B: rear side
- 40C: peak

## Claims

1. A pneumatic tire (10), comprising:
an outer layer (36) that structures a tread;
an inner layer (38) that is layered at a tire radial direction inner side of the outer layer (36), that structures the tread, and that has a different wear characteristic from the outer layer (36); and
a boundary surface (40) that structures a border of the outer layer (36) and the inner layer (38), and that, in a tire radial direction cross-section seen from a tire axial direction, has wave shapes having an amplitude in a tire radial direction,
**characterised in that** the boundary surface (40) is flat in the tire axial direction.

2. The pneumatic tire (10) of Claim 1, wherein progression of wear of the inner layer (38) is faster than progression of wear of the outer layer (36).

3. The pneumatic tire (10) of any one of Claim 1 or Claim 2, wherein:
a plurality of circumferential direction grooves (24, 26) that extend in a tire circumferential direction are formed in the tread; and
the boundary surface (40) is positioned further toward a tire radial direction outer side than groove bottoms of the circumferential direction grooves (24, 26).

4. The pneumatic tire (10) of any one of Claim 1 through Claim 3, wherein:
a tire rotational direction is specified; and
in a tire circumferential direction cross-section seen from the tire axial direction, the boundary surface (40) has triangular wave shapes at which front sides (40A), that are positioned at a tire rotational direction front side, and rear sides (40B), that are positioned at a tire rotational direction rear side, intersect at peaks (40C) at a tire radial direction outer side, and a length of the front sides (40A) is formed to be longer than a length of the rear sides (40B).

## Patentansprüche

1. Luftreifen (10), umfassend:
eine Außenschicht (36), welche eine Lauffläche strukturiert;
eine Innenschicht (38), welche auf einer radial inneren Reifenseite der Außenschicht (36) aufgelegt ist, welche die Lauffläche strukturiert, und welche eine von der Außenschicht (36) unterschiedlichen Verschleißcharakteristik aufweist; und
eine Grenzfläche (40), welche einen Rand der Außenschicht (36) und der Innenschicht (38) strukturiert, und welche in einem in der Radialrichtung des Reifens gelegenen Querschnitt, aus einer axialen Richtung des Reifens gesehen, Wellenformen aufweist, welche eine Amplitude in der radialen Richtung des Reifens aufweisen,
**dadurch gekennzeichnet, dass** die Grenzfläche (40) in der axialen Richtung des Reifens flach ist.

2. Luftreifen (10) nach Anspruch 1, wobei das Fortschreiten des Verschleiß der Innenschicht (38) schneller als das Fortschreiten des Verschleiß der Außenschicht (36) ist.

3. Luftreifen (10) nach einem der Ansprüche 1 oder 2, wobei:
eine Mehrzahl von umfänglich gerichteten Rillen (24, 26), welche sich in einer Reifenumfangsrichtung erstrecken, in der Lauffläche gebildet ist; und
die Grenzfläche (40) an einer radial äußeren Reifenseite näher liegt als die Rillengründe der umfänglich gerichteten Rillen (24, 26).

4. Luftreifen (10) nach einem der Ansprüche 1 bis 3, wobei:
eine Reifendrehrichtung spezifiziert wird; und
in einem in der Radialrichtung des Reifens gelegenen Querschnitt, aus einer axialen Richtung des Reifens gesehen, die Grenzfläche (40) dreieckige Wellenformen aufweist, an welchen Vorderseiten (40A), welche auf einer in der Reifendrehrichtung gelegenen Vorderseite angeordnet sind, und Rückseiten (40B), welche auf einer in der Reifendrehrichtung gelegenen Rückseite angeordnet sind, sich an Spitzen (40C) auf einer in der Reifenradialrichtung gelegenen Außenseite kreuzen, und die Länge der Vorderseiten (40A) ausgebildet ist, um länger als die Länge der Rückseiten (40B) zu sein.

## Revendications

1. Bandage pneumatique (10), comprenant :
une couche externe (36) structurant une bande de roulement ;
une couche interne (38) agencée au niveau d'un côté interne, dans la direction radiale du bandage pneumatique, de la couche externe (36), structurant la bande de roulement, et présentant une caractéristique d'usure différente de celle de la couche externe (36) ; et
une surface de délimitation (40), structurant une limite de la couche externe (36) et de la couche interne (38), et ayant, dans une section transversale dans la direction radiale du bandage pneumatique, vue à partir d'une direction axiale du bandage pneumatique, des formes d'onde ayant une amplitude dans une direction radiale du bandage pneumatique ;
**caractérisé en ce que** la surface de délimitation (40) est plate dans la direction axiale du bandage pneumatique.

2. Bandage pneumatique (10) selon la revendication 1, dans lequel la progression de l'usure de la couche interne (38) est plus rapide que la progression de l'usure de la couche externe (36).

3. Bandage pneumatique (10) selon l'une quelconque des revendications 1 ou 2, dans lequel :
plusieurs rainures à direction circonférentielle (24, 26) s'étendant dans une direction circonférentielle du bandage pneumatique, sont formées dans la bande de roulement ; et
la surface de délimitation (40) est positionnée plus vers un côté externe, dans la direction radiale du bandage pneumatique, que des fonds de rainure des rainures à direction circonférentielle (24, 26).

4. Bandage pneumatique (10) selon l'une quelconque des revendications 1 à 3, dans lequel :
une direction de rotation du bandage pneumatique est spécifiée ; et
dans une section transversale, dans une direction circonférentielle du bandage pneumatique, vue à partir de la direction axiale du bandage pneumatique, la surface de délimitation (40) comporte des formes d'onde triangulaires, au niveau desquelles des côtés avant (40A), positionnés au niveau d'un côté avant dans la direction de rotation du bandage pneumatique, et des côtés arrière (40B), positionnés au niveau d'un côté arrière dans la direction radiale du bandage pneumatique, se coupent au niveau de crêts (40C) au niveau d'un côté externe dans la direction radiale du bandage pneumatique, une longueur des côtés avant (40A) étant formée de sorte à être supérieure à une longueur des côtés arrière (40B).
